# EUROPÄISCHE PATENTSCHRIFT

(11) **EP 4 131 848 B1**
(45) Veröffentlichungstag und Bekanntmachung des Hinweises auf die Patenterteilung: **03.09.2025**
(21) Anmeldenummer: 22182804.9
(22) Anmeldetag: 04.07.2022
(51) Int. Cl.: G08C 19/02, H04L 12/10, H04B 3/54, H04L 12/40

(54) **VERFAHREN UND VERSCHALTUNG ZUM BETRIEB EINES NETZWERKS ODER NETZWERKABSCHNITTS**
METHOD AND CIRCUIT FOR OPERATING A NETWORK OR NETWORK SECTION
PROCÉDÉ ET CIRCUIT PERMETTANT DE FAIRE FONCTIONNER UN RÉSEAU OU UNE SECTION DE RÉSEAU

(30) Priorität: 05.08.2021 DE 102021120393
(43) Veröffentlichungstag der Anmeldung: 08.02.2023
(73) Patentinhaber: Turck Holding GmbH, 58553 Halver (DE)
(72) Erfinder: vom Stein, Johannes, 42499 Hückeswagen (DE)
(74) Vertreter: DTS Patent- und Rechtsanwälte PartmbB

(56) Entgegenhaltungen:
- GB-A- 2 517 727

## Beschreibung

Die vorliegende Erfindung betrifft ein Verfahren für einen sicheren Betrieb eines Netzwerkes oder Netzwerkabschnitt nach dem Oberbegriff des Anspruchs 1 und eine zugehörige Verschaltung nach dem Oberbegriff des Anspruchs 12.

Mit SPE (Single Pair Ethernet) bzw. APL (Advanced Physical Layer) ist es grundsätzlich möglich ein funktional sicheres Protokoll (z.B. PROFIsafe, CIPP Safety) zu übermitteln. Die Übertragungsstrecke wird dabei als "schwarzer Kanal" genutzt, wobei sichere Pakete über einen unsicheren Weg versandt werden.

Beispielsweise offenbart die CN 210867687 U eine derartige, gemischte Signalübertragung, bei der auch die Gleichspannungsversorgung als Signal gewertet wird. Aus der US 2012/317,426 A1 ist bekannt, die Klassifizierung der Spannungsversorgung durch die Einstellung eines Widerstandes im PD (Powered Device) vorzunehmen. In dem vorgeschlagenen Verfahren, betrifft allerdings die Informationsübermittlung über die Leistung nur den Initialisierungsvorgang zur Versorgung mit der geeigneten Spannung. Die US 2019/342011 A1 offenbart ein Verfahren zur Informationsübermittlung über die Gleichspannungsversorgung, bei dem die funktionalen Blöcke im PD und im PSE aufgezeigt werden, und ein Initialisierungsvorgang erfolgt. Die GB 2 517 727 A beschreibt ein Verfahren für eine Datenkommunikation über eine Stromleitung.

Hauptnachteil dieser Lösungen ist, dass entweder die Zustandsdaten des PD nur diskontinuierlich gesendet werden oder die Logik-Verarbeitung auch mit hohem Sicherheitslevel durchgeführt werden muss. Dafür sind aufwändige Strukturen nötig, wie beispielsweise redundante Mikroprozessoren. Die sichere Übertragung einer digitalen Information bedarf somit eines hohen Aufwandes in Hard- und Software.

Es ist die Aufgabe der vorliegenden Erfindung ist es, ein Verfahren und eine zugehörige Verschaltung zur Datenübertragung vorzuschlagen, welches eine höhere Sicherheit (Sicherheitslevel) aufweist, um sichere Aussagen über ein Netz- oder einen Netzabschnittszustand zu tätigen.

Diese Aufgabe wird erfindungsgemäß gelöst durch ein Verfahren zum Betrieb eines Netzes oder Netzabschnitts nach den Merkmalen des Anspruchs 1 und eine zugehörige Verschaltung nach den Merkmalen des Anspruches 12. Vorteilhafte Ausgestaltungen sind in den jeweiligen, zugehörigen Unteransprüchen angegeben.

Danach wird die Aufgabe gelöst durch ein Verfahren zum Betrieb eines Netzwerks oder Netzwerkabschnitts mit einer Versorgungs- und Signalübertragung über zwei Adern, umfassend eine ein PSE (Power Sourcing Equipment) aufweisende erste Netzwerkseite und eine ein PD (Powered Device) aufweisende zweite Netzwerkseite, wobei die erste und zweite Netzwerkseite über die Versorgungs- und Signalübertragung verbunden sind, und wobei sicherheitsrelevante Zustandsdaten zur Feststellung eines sicheren Zustands übermittelt werden, wobei die Zustandsdaten redundant über die folgenden beiden Übertragungswege übermittelt werden: i) ein digitales Datenprotokoll, wobei eine erste Übermittlung der Zustandsdaten mittels eines seriellen, digitalen Datenpaketes erfolgt, und ii) eine Kodierung in der Leistungsübertragung, wobei eine zweite Übermittlung der Zustandsdaten mittels einer aufgeprägten Charakteristik des Stroms erfolgt, nämlich mittels einer analogen Charakteristik des Stroms, wobei die redundante Übertragung der Zustandsdaten auf den beiden Übertragungswegen physikalisch nicht korreliert.

Hierbei meint "sicherheitsrelevante Zustandsdaten" die Information über potenziell gefahrbringende Zustände einer Maschine oder Anlage, die als Ergebnis einer Risikobeurteilung ausgemacht wurden. Gefahrbringende Zustände können z.B. Bewegungen sein, die den Bediener einer Maschine irreversibel schädigen könnten. Insbesondere werden die möglichen Zustände in einen sicheren und einen unsicheren Zustand eingeteilt, wobei im sicheren Zustand keine Gefährdung von der Maschine oder Anlage ausgeht, während im unsicheren Zustand eine potenziell gefahrbringende Funktion freigegeben wird. Nachfolgend wird verkürzt nur über "Zustandsdaten" gesprochen, was die vorgenannten, sicherheitsrelevanten (Zustands-)Daten über den Zustand des Systems meint.

Weiterhin ist unter physikalisch "nicht korrelieren" oder "keine Korrelation" der Zustandsdaten über die beiden Übertragungen zu verstehen, dass diese physikalisch nicht ineinander übertragen oder ineinander abgeleitet werden können, wie beispielsweise eine lineare Verstärkung, eine Multiplikation, Überlagerung (Addition/Subtraktion) von Signalen, etc.

Der besondere Vorteil besteht darin, dass der Aufwand für die sichere Übertragung eines digitalen Signals (z.B. Nothalt) wesentlich geringer ist, als wenn dazu ein sicheres Busprotokoll genutzt wird. Aufwände zum Erreichen eines hohen Sicherheitslevels lassen sich auf sicherheitsrelevante Einheiten begrenzen. Die geschieht, indem zum Beispiel die messenden Sensoren, deren Sicherheitsanforderung sich nur auf einen Schaltpunkt bezieht, für den messenden Teil nur "einfache" Anforderungen erfüllen und nur für den sicherheitsrelevanten Schaltpunkt die aufwändigeren Sicherheitsanforderungen gegeben sein muss. Es wird insgesamt eine ausgeprägte Diversität erreicht, da das digitale, serielle Protokoll und die Leistungsaufnahme sich voneinander stark unterscheidende Kanäle darstellen, die unterschiedliche Bauteile und Prinzipien verwenden.

Eine verbesserte Verfahrensvariante sieht vor, dass die Zustandsdaten sicherheitsrelevante Zustände des Netzwerks oder Netzwerkabschnitts darstellen, wobei insbesondere ein sicherer und ein unsicherer Zustand bestimmbar ist. Hierbei erfolgt die erste Übermittlung der Zustandsdaten mittels eines seriellen, digitalen Datenpaketes, das beispielsweise einer der Standardisierten Protokolle entspricht, insbesondere eines seriellen Signales entsprechend der IEEE 802.3cg:2019. Die zweite Übermittlung der Zustandsdaten erfolgt als eine aufgeprägte Charakteristik des Stroms, was insbesondere durch eine analoge Charakteristik des Stroms erfolgen kann. Diese analoge Charakteristik kann beispielsweise eine definierte Stromhöhe für eine definierte Zeitdauer und/oder ein getakteter Stromverlauf für eine definierte Zeitdauer sein. Es kann aber auch eine sinusartig schwingende Stromhöhe sein, mit definierten Amplituden und Frequenzen, wobei eine gewisse Schwingungscharakteristik für mindestens eine definierte Zeitdauer beibehalten wird. Nachfolgend wird eine hierzu unterschiedliche Schwingungscharakteristik aufgeprägt.

Die zweite Übermittlung der Zustandsdaten wird auf der das PD umfassenden zweiten Netzwerkseite aufgeprägt und auf der das PSE umfassenden oder darstellenden ersten Netzwerkseite empfangen und auswertet. Die Auswertung besteht insbesondere darin, dass ein so genannter "sicherer" oder "ein unsicherer" Zustand bestimmt wird.

Dabei meint "sichere oder unsicherer Zustand", dass der "unsichere" Zustand eine potenziell gefährdende Funktion freigibt und dadurch gekennzeichnet ist, dass der unsichere Zustand technisch nicht zufällig eintreten kann. Der "sichere" Zustand wird insbesondere durch einen einfachen Fehler erreicht.

Eine Verbesserung besteht darin, wenn die zweite Übermittlung der Zustandsdaten mindestens eine definierte Stromhöhe ist, die mindestens das 1,3-fache, vorteilhafterweise mindestens das 1,5-fache des mittleren nicht modulierten Stromverlaufs beträgt, und wobei die mindestens eine definierte Stromhöhe für eine definierte Zeitdauer konstant oder im Wesentlichen konstant gehalten wird. Alternativ oder zusätzlich kann auch vorgesehen werden, dass die zweite Übermittlung der Zustandsdaten mindestens eine definierte Stromhöhe ist, die mindestens das 1,1-fache, vorteilhafterweise mindestens das 1,3-fache des maximal möglichen nicht modulierten Stromverlaufs beträgt, und wobei die mindestens eine definierte Stromhöhe für eine definierte Zeitdauer konstant oder im Wesentlichen konstant gehalten wird. Die jeweiligen, vorgenannten Charakteristiken der Stromhöhen können auch eine gewissen Frequenz abwechselnd zur zweiten Übermittlung von Zustandsdaten genutzt werden.

Hierbei kann vorteilhafterweise die zweite Übermittlung der Zustandsdaten und/oder die beiden parallelen Übermittlungen von Zustandsdaten mit identischem Aussagegehalt zu den Zustandsdaten, insbesondere des potenziell gefährlichen Betriebs, im bestimmungsgemäßen Betrieb des Verfahrens nicht zufällig auftreten.

Eine Verfahrensverbesserung besteht darin, dass das Verhältnis von definierter Zeitdauer zur undefinierten Zeitdauer des Stromverlaufs maximal 1/1000 beträgt, wobei die definierte Zeitdauer größer als 0,25 ms ist, insbesondere größer als 0,5 ms. Somit wird ein klar definierter, gesteuerter Zustand von einem allgemeinen Betriebssystemzustand des Netzes oder Netzabschnitts unterscheidbar.

Vorteilhafterweise liefert zur Detektion eines Einfachfehlers die erste und zweite Übermittlung der Zustandsdaten, insbesondere des potenziell gefährlichen Zustandes, immer dieselbe Information. Die Ungleichheit der redundant übermittelten Zustandsinformationen wird dabei als fehlerhafter Zustand definiert. Zur Vermeidung von falsch-negativen Signalen ist eine weitere Verbesserung darin zu sehen, wenn eine maximale Justierdauer zur Erreichung der Gleichheit der beiden Zustandsinformationen definiert ist, deren Überschreitung bis zur Erreichung der Gleichheit als Fehler und/oder sicherer Zustand gewertet wird. Die Einleitung des sicheren Zustands (z.B. Not-Halt) bedeutet steuerungstechnisch, dass die potenziell gefährdende Funktion nicht freigegeben wird (z.B. Abschaltung der Maschine oder Anlage).

Weiterhin ist von der Erfindung eine Verschaltung für eine Netzwerk oder Netzwerkabschnitt umfasst, die eine ein PSE (Power Sourcing Equipment) aufweisende erste Netzwerkseite und eine ein PD (Powered Device) aufweisende zweite Netzwerkseite umfasst. Die erste und zweite Netzwerkseite sind dabei mittels einer Zweidrahttechnologie, wie eines SPE (Single Pair Ethernet) oder allgemein einer PoDL (Power over Data Line) als Versorgungs- und Signalübertragung verbunden. Die Verschaltung ist hierbei so ausgelegt, dass das vorgenannte Verfahren nach einem der beschriebenen Ausführungsvarianten betrieben werden kann.

Bei einer Ausführungsform ist auf jeder Netzwerkseite jeweils ein als passives Bauelement ausgebildete Koppler vorgesehen, mittels welchen die serielle, insbesondere digitale Datenübertragung und die Leistungsübertragung auf den beiden Adern erfolgt, und weiterhin ist ein Physical Layer (PHY) als Sende- und Empfangsmodule vorgesehen. Dabei besteht eine Verbesserung der Koppler darin, dass die Koppler derart ausgelegt sind, um keine Beeinflussung oder Korrelation zwischen der ersten und zweiten Übertragung der Zustandsdaten über die jeweilige Ader zuzulassen. Hierbei ist "korrelieren" oder "Korrelation" zu verstehen, wie oben ausgeführt. Die Spannungsquelle der PD umfassenden Netzwerkseite wird über den Kopper aus der Leistungsübertragung gespeist, die über die beiden Adern erfolgt. Vorteilhafterweise ist zwischen dem Koppler und der Spannungsquelle eine Verschaltung eingebracht, mit der eine Stromentnahme entsprechend einer Vorgabe eingeprägt werden kann.

Das PD ist vorteilhafterweise entweder ausgebildet als Sensor, der als Sender des zweiten logischen Signals der Zustandsdaten dient oder als Aktor, der als Empfänger der Zustandsdaten fungiert, insbesondere der zweiten Übertragung der Zustandsdaten. Hierbei kann auf der ersten das PSE umfassenden Netzwerkseite, der Port eines (Hub-)Moduls, der eine SPE Anbindung und die Erfassung der Ausgangsleistung umfasst, derart ausgebildet sein, dass er mit derselben Hardware als sicherer Port für Sensoren, als sicherer Eingang, und für Aktoren, als sicherer Ausgang, funktioniert.

Eine weitere Verbesserung der Verschaltung besteh darin, dass auf jeder Netzwerkseite mindestens ein Mikroprozessor (µC) vorgesehen ist, wobei diese ausgelegt sind, redundant zu arbeiten und einen Kreuzvergleich aller sicherheitsrelevanter Schritte (Entscheidungen) durchzuführen. Alternativ oder als zusätzliche, redundante Sicherheit, kann auf der zweiten das PD umfassenden Netzwerkseite zur Aufprägung der Zustandsdaten zur zweiten Übermittlung in der Leistungsübertragung, eine Hardware-Verschaltung vorgesehen sein, insbesondere statt eines Mikroprozessors.

Weitere Einzelheiten und Vorteile der Erfindung sollen nun anhand eines in den Zeichnungen dargestellten Ausführungsbeispiels näher erläutert werden.

Es zeigen:
- Fig. 1: eine Verschaltung mit SPE-Verbindung,
- Fig. 2: eine analoge Übertragung von Zustandsdaten.

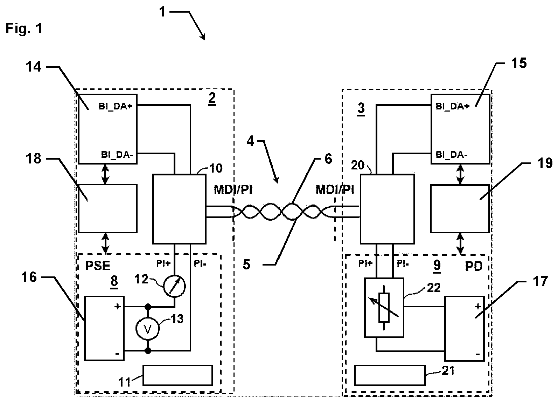

Die in der Figur 1 gezeigte Verschaltung für den Betrieb eines Netzwerkes 1, weist ein der ersten Netzwerkseite 2 zugeordnetes PSE 8 auf und eine der zweiten Netzwerkseite 3 zugeordnetes PD 9 auf. Die beiden Netzwerkseiten 2, 3 sind über die beiden Adern 5, 6 des SPE 4 verbunden, über welche sowohl die Leistung (Versorgung) als auch Daten übermittelt werden. Eingangs beider Netzwerkseiten 2, 3 ist jeweils ein Koppler 10, 20 vorgesehen, die als passive Bauelemente ausgebildet sind und über welche die serielle Datenübertragung und Leistungsübertragung auf den beiden Adern 5, 6 erfolgt. Zwei PHY 14, 15, jeweils auf jeder Netzwerkseite 2, 3 einer, dienen als Sende- und Empfangsmodule, wobei die dort zu empfangenden oder zu sendenden Daten in den jeweils zugehörigen Mikroprozessoren 18, 19 vorbereitet und/oder ausgewertet und verarbeitet werden. Das PD 9 weist eine Versorgungseinheit 17 als Spannungsquelle für die Netzwerkseite 3 auf, die über den Koppler 20 gespeist wird und eine Verschaltung 22, mit der eine Stromentnahme entsprechend einer Vorgabe eingeprägt werden kann. Aus diese Weise wird Leistung als Spannungsversorgung dieser Netzwerkseite entnommen, insbesondere für den Mikroprozessor 19, den PHY 15 und eine nicht dargestellte Sensoreinheit.

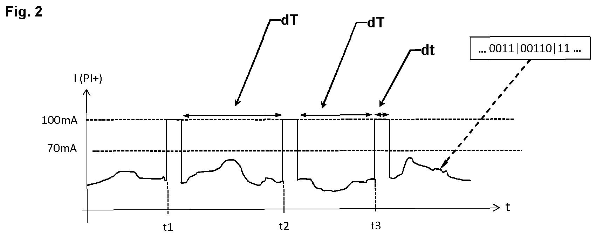

In dem gezeigten Ausführungsbeispiel werden die Zustandsdaten zur zweiten Übermittlung, wie nachfolgend in der Figur 2 dargestellt, auf der das PD 9 umfassenden zweiten Netzwerkseite 3 aufgeprägt und auf der das PSE 8 umfassenden ersten Netzwerkseite 2 empfangen und auswertet. Hierbei wird ein sicherer oder ein unsicherer Zustand bestimmt.

Die Definitionen, welche Werte oder Daten bzw. deren Abfolge als Zustandsdaten übertragen werden und welche Werte oder Daten (Abfolge) als sicherer oder unsicherer Zustand definiert sind, sind in Speicherelementen 11, 21 abgelegt, die den jeweiligen Netzwerkseite zugeordnet sind. Diese Werte oder Zustände müssen vom Sender generiert werden und vom Empfänger gemessen werden, um diese zu übermitteln.

Die Definitionen der Werte und Wertgrenzen werden idealerweise aus bekannten Standards abgeleitet. Hierzu können beispielsweise die Spannungs- und Stromklassen gemäß der IEEE 802.3cg:2019 (Tabelle 104) herangezogen werden. Gemäß der dortigen Klassen 12-36 V / 340 mA für 24 V Sensoren, besteht ein Standardwert von 340 mA, welcher beispielsweise alle 500 ms für mindestens 1 ms gezogen werden kann, wobei gegebenenfalls Toleranzen zu beachten sind.

Die Figur 2 zeigt einen Verlauf der Stromstärke über der Zeit. Die betriebsbedingten Stromstärken betragen in dem gezeigten Verlauf und für die gezeigte Klasse maximal ca. 60 mA und sind systembedingt auf 70 mA begrenzt. Dieser für den Normalbetrieb charakteristische Stromverlauf wird für die (Betriebs-)Zeitdauer dT von 500 ms aufrechterhalten. An den Zeitpunkten t1, t2, t3 wird eine definierte Stromstärke von 100 mA aufgeprägt und für die (Zustands-)Zeitdauer dt von 1 ms aufrecht gehalten. Wie vorstehend erwähnt, können im bestimmungsgemäßen Betrieb des Netzes 1 oder im Fehlerfall, diese Zustandsdaten der beiden getakteten Zeitdauern dt/dT für die definierte SOLL-Stromstärke von 100 mA erreicht werden.

Der zweite Zustandswert ist ein bekanntes digitales, serielle Signal, welches ebenfalls getaktet und auf die Stromkurve aufgeprägt übermittelt wird. Beide Signale sind vollständig unabhängig voneinander, wie vorstehend bereits ausgeführt.

Vorliegend wird die Ungleichheit der übermittelten Zustände als sicherer Zustand bestimmt und zur Detektion eines Einfachfehlers liefern die beiden Kanäle immer dieselbe Information. Somit wird eine Ungleichheit als fehlerhafter Zustand erkannt.

### Bezugszeichenliste

- 1: Netzwerk
- 2: Netzwerkseite, erste
- 3: Netzwerkseite, zweite
- 4: SPE (Single Pair Ethernet)
- 5: Ader
- 6: Ader

- 8: PSE (Power Sourcing Equipment)
- 9: PD (Powered Device)
- 10: Koppler, erster
- 11: Datenspeicher
- 12: Strommesseinheit
- 13: Spannungsmesseinheit
- 14: Physical Layer (PHY)
- 15: Physical Layer (PHY)
- 16: Spannungsquelle
- 17: Versorgungseinheit
- 18: Mikroprozessor
- 19: Mikroprozessor
- 20: Koppler, zweiter
- 21: Datenspeicher
- 22: Verschaltung

- dt: Zeitdauer
- dT: Zeitdauer

## Patentansprüche

1. Verfahren zum Betrieb eines Netzwerks oder Netzwerkabschnitts (1) mit einer Versorgungs- und Signalübertragung (4) über zwei Adern (5, 6), umfassend eine ein Power Sourcing Equipment, PSE, (8) aufweisende erste Netzwerkseite (2) und eine ein Powered Device, PD, (9) aufweisende zweite Netzwerkseite (3), wobei die erste (2) und zweite Netzwerkseite (3) über die Versorgungs- und Signalübertragung verbunden sind, und wobei sicherheitsrelevante Zustandsdaten zur Feststellung eines sicheren Zustands übermittelt werden, **dadurch gekennzeichnet, dass**
die Zustandsdaten redundant über die folgenden beiden Übertragungswege übermittelt werden:
- ein digitales Datenprotokoll, wobei eine erste Übermittlung der Zustandsdaten mittels eines seriellen, digitalen Datenpaketes erfolgt, und
- eine Kodierung in der Leistungsübertragung, wobei eine zweite Übermittlung der Zustandsdaten mittels einer aufgeprägten Charakteristik des Stroms erfolgt,
nämlich mittels einer analogen Charakteristik des Stroms,
wobei die redundante Übertragung der Zustandsdaten auf den beiden Übertragungswegen physikalisch nicht korreliert, wobei die erste und zweite Übermittlung nicht physikalisch ineinander übertragen oder ineinander abgeleitet werden können.

2. Verfahren nach Anspruch 1, **dadurch gekennzeichnet, dass** die Zustandsdaten sicherheitsrelevante Zustände des Netzwerks oder Netzwerkabschnitts (1) darstellen, wobei insbesondere ein sicherer und ein unsicherer Zustand bestimmbar ist.

3. Verfahren nach Anspruch 1 oder 2, **dadurch gekennzeichnet, dass** das serielle Signal entsprechend der IEEE 802.3cg:2019 ausgebildet ist.

4. Verfahren nach einem der vorherigen Ansprüche, **dadurch gekennzeichnet, dass** die Charakteristik des Stroms als zweite Übermittlung der Zustandsdaten eine definierte Stromhöhe für eine definierte Zeitdauer und/oder ein getakteter Stromverlauf für eine definierte Zeitdauer ist.

5. Verfahren nach einem der vorherigen Ansprüche, **dadurch gekennzeichnet, dass** die zweite Übermittlung der Zustandsdaten auf der das PD (9) umfassenden zweiten Netzwerkseite (3) aufgeprägt und auf der das PSE (8) umfassenden ersten Netzwerkseite (2) empfangen und auswertet wird, insbesondere hierdurch ein sicherer oder ein unsicherer Zustand bestimmt wird.

6. Verfahren nach einem der vorherigen Ansprüche, **dadurch gekennzeichnet, dass** die Übermittlung der Zustandsdaten mindestens eine definierte Stromhöhe ist, die mindestens das 1,3-fache, vorteilhafterweise mindestens das 1,5-fache des mittleren nicht modulierten Stromverlaufs beträgt, und wobei die mindestens eine definierte Stromhöhe für eine definierte Zeitdauer (dt) konstant oder im Wesentlichen konstant gehalten wird.

7. Verfahren nach einem der vorherigen Ansprüche, **dadurch gekennzeichnet, dass** die zweite Übermittlung der Zustandsdaten mindestens eine definierte Stromhöhe ist, die mindestens das 1,1-fache, vorteilhafterweise mindestens das 1,3-fache des maximal möglichen nicht modulierten Stromverlaufs beträgt, und wobei die mindestens eine definierte Stromhöhe für eine definierte Zeitdauer (dt) konstant oder im Wesentlichen konstant gehalten wird.

8. Verfahren nach einem der vorherigen Ansprüche, **dadurch gekennzeichnet, dass**
- die zweite Übermittlung der Zustandsdaten und/oder
- die beiden parallelen Übermittlungen von Zustandsdaten mit identischem Aussagegehalt, insbesondere des potenziell gefährlichen Betriebs, im bestimmungsgemäßen Betrieb des Verfahrens nicht zufällig auftreten kann/können.

9. Verfahren nach Anspruch 7 oder 8, **dadurch gekennzeichnet, dass** das Verhältnis von definierter Zeitdauer (dt) zur undefinierten Zeitdauer (dT) des Stromverlaufs maximal 1/1000 beträgt, wobei die definierte Zeitdauer (dt) größer als 0,25 ms ist, insbesondere größer als 0,5 ms.

10. Verfahren nach einem der vorstehenden Ansprüche, **dadurch gekennzeichnet, dass** zur Detektion eines Einfachfehlers die erste und zweite Übermittlung der Zustandsdaten, insbesondere des potenziell gefährlichen Zustandes, immer dieselbe Information liefern, wobei eine Ungleichheit der Informationen der ersten und zweiten Übermittlung einen fehlerhaften Zustand definiert.

11. Verfahren nach Anspruch 10, **dadurch gekennzeichnet, dass** eine maximale Justierdauer zur Erreichung einer Gleichheit der beiden Informationen der ersten und zweiten Übermittlung definiert ist, wobei eine Überschreitung der maximalen Justierdauer bis zur Erreichung der Gleichheit als Fehler gewertet wird.

12. Verschaltung für ein Netzwerk oder einen Netzwerkabschnitt (1) umfassend eine ein Power Sourcing Equipment, PSE, (8) aufweisende erste Netzwerkseite (2) und eine ein Powered Device, PD, (9) aufweisende zweite Netzwerkseite (3), wobei die erste (2) und zweite Netzwerkseite (3) mittels eines SPE (4) als synchrone Versorgungs- und Signalübertragung verbunden sind, **dadurch gekennzeichnet, dass** die Verschaltung ausgelegt ist, dass das Verfahren nach einem der vorstehenden Ansprüche hiermit betrieben werden kann.

13. Verschaltung nach Anspruch 12, **dadurch gekennzeichnet, dass** auf jeder Netzwerkseite (2, 3) jeweils
- ein als passives Bauelement ausgebildete Koppler (10, 20) vorgesehen ist, mittels welchen die serielle Datenübertragung und Leistungsübertragung auf den beiden Adern (5, 6) erfolgt und
- ein PHY (14, 15) als Sende- und Empfangsmodule.

14. Verschaltung nach Anspruch 13, **dadurch gekennzeichnet, dass** die Koppler (10, 20) derart ausgelegt sind, dass es keine Beeinflussung oder Korrelation zwischen der ersten und zweiten Übertragung der Zustandsdaten über die jeweilige Ader (5, 6) erfolgt.

15. Verschaltung nach einem der Ansprüche 12 bis 14, **dadurch gekennzeichnet, dass** die das PD (9) umfassenden zweiten Netzwerkseite (3) eine Versorgungseinheit (17) als Spannungsquelle umfasst, die insbesondere über den Koppler (20) gespeist wird.

16. Verschaltung nach einem der Ansprüche 12 bis 15, **dadurch gekennzeichnet, dass** das PD (9)
- als Sensor ausgebildet ist und der Sender des zweiten logischen Signals der Zustandsdaten ist oder
- als Aktor ausgebildet ist und der Empfänger der Zustandsdaten ist, insbesondere der zweiten Übertragung der Zustandsdaten.

17. Verschaltung nach einem der Ansprüche 12 bis 16, **dadurch gekennzeichnet, dass** auf jeder Netzwerkseite (2, 3) mindestens ein Mikroprozessor (18, 19) vorgesehen ist, wobei diese ausgelegt sind, redundant zu arbeiten und einen Kreuzvergleich aller sicherheitsrelevanter Schritte durchzuführen.

18. Verschaltung nach Anspruch 17, **dadurch gekennzeichnet, dass** auf der zweiten das PD (9) umfassenden Netzwerkseite (3) zur Aufprägung der Zustandsdaten zur Übermittlung in der Leistungsübertragung statt des Mikroprozessors (19) eine Hardware-Verschaltung vorgesehen ist.

## Claims

1. Method for operating a network or network section (1) with supply and signal transmission (4) over two wires (5, 6), comprising a first network side (2) having power sourcing equipment, PSE, (8) and a second network side (3) having a powered device, PD, (9), wherein the first network side (2) and second network side (3) are connected via the supply and signal transmission, and wherein safety-relevant state data for determining a safe state are transmitted,
**characterized in that**
the state data are transmitted redundantly via the following two transmission paths:
- a digital data protocol, wherein a first transmission of the state data is carried out by means of a serial, digital data packet, and
- a coding in the power transmission, wherein a second transmission of the state data is carried out by means of an impressed characteristic of the current, namely by means of an analogue characteristic of the current,
wherein the redundant transmission of the state data on the two transmission paths does not correlate physically, in which case the first and second transmission cannot be physically transferred into each other or derived into each other.

2. Method according to Claim 1, **characterized in that** the state data represent safety-relevant states of the network or network section (1), wherein in particular a safe and an unsafe state can be determined.

3. Method according to Claim 1 or 2, **characterized in that** the serial signal is formed according to IEEE 802.3cg:2019.

4. Method according to one of the preceding claims, **characterized in that** the characteristic of the current as the second transmission of the state data is a defined current level for a defined time period and/or a clocked current profile for a defined time period.

5. Method according to one of the preceding claims, **characterized in that** the second transmission of the state data is impressed on the second network side (3) comprising the PD (9) and is received and evaluated on the first network side (2) comprising the PSE (8), in particular thereby determining a safe or an unsafe state.

6. Method according to one of the preceding claims, **characterized in that** the transmission of the state data is at least one defined current level which is at least 1.3 times, advantageously at least 1.5 times, the mean unmodulated current profile, and wherein the at least one defined current level is kept constant or substantially constant for a defined time period (dt).

7. Method according to one of the preceding claims, **characterized in that** the second transmission of the state data is at least one defined current level which is at least 1.1 times, advantageously at least 1.3 times, the maximum possible unmodulated current profile, and wherein the at least one defined current level is kept constant or substantially constant for a defined time period (dt).

8. Method according to one of the preceding claims, **characterized in that**
- the second transmission of the state data and/or
- the two parallel transmissions of state data with identical information content, in particular relating to potentially dangerous operation, cannot occur randomly during intended operation of the method.

9. Method according to Claim 7 or 8, **characterized in that** the ratio of defined time period (dt) to the undefined time period (dT) of the current profile is at most 1/1000, wherein the defined time period (dt) is greater than 0.25 ms, in particular greater than 0.5 ms.

10. Method according to one of the preceding claims, **characterized in that**, in order to detect a single error, the first and second transmission of the state data, in particular the potentially dangerous state, always provide the same information, wherein a disparity of the information in the first and second transmission defines a faulty state.

11. Method according to Claim 10, **characterized in that** a maximum adjustment period is defined for achieving equality of the two items of information in the first and second transmission, wherein exceeding the maximum adjustment period until the equality is achieved is evaluated as an error.

12. Circuit for a network or a network section (1) comprising a first network side (2) having power sourcing equipment, PSE, (8) and a second network side (3) having a powered device, PD, (9), wherein the first network side (2) and second network side (3) are connected by means of SPE (4) as synchronous supply and signal transmission, **characterized in that** the circuit is designed such that the method according to one of the preceding claims can be operated herewith.

13. Circuit according to Claim 12, **characterized in that** on each network side (2, 3) respectively
- a coupler (10, 20) in the form of a passive component is provided and is used to perform the serial data transmission and power transmission on the two wires (5, 6), and
- a PHY (14, 15) is provided as transmitting and receiving modules.

14. Circuit according to Claim 13, **characterized in that** the couplers (10, 20) are designed in such a way that there is no influence or correlation between the first and second transmission of the state data over the respective wire (5, 6).

15. Circuit according to one of Claims 12 to 14, **characterized in that** the second network side (3) comprising the PD (9) comprises a supply unit (17) as a voltage source, which is supplied in particular via the coupler (20).

16. Circuit according to one of Claims 12 to 15, **characterized in that** the PD (9)
- is in the form of a sensor and is the transmitter of the second logical signal of the state data, or
- is in the form of an actuator and is the receiver of the state data, in particular the second transmission of the state data.

17. Circuit according to one of Claims 12 to 16, **characterized in that** at least one microprocessor (18, 19) is provided on each network side (2, 3), these microprocessors being designed to work redundantly and to carry out a cross-comparison of all safety-relevant steps.

18. Circuit according to Claim 17, **characterized in that** a hardware circuit is provided, instead of the microprocessor (19), on the second network side (3) comprising the PD (9) for impressing the state data for transmission in the power transmission.

## Revendications

1. Procédé pour faire fonctionner un réseau ou une portion de réseau (1) avec une transmission d'alimentation et de signaux (4) par le biais de deux fils (5, 6), comprenant un premier côté réseau (2) qui possède un équipement d'alimentation électrique (PSE) (8) et un deuxième côté réseau (3) qui possède un dispositif alimenté (PD) (9), le premier côté réseau (2) et le deuxième côté réseau (3) étant reliés par le biais de la transmission d'alimentation et de signaux, et des données d'état relatives à la sécurité étant communiquées en vue de constater un état sûr,
**caractérisé en ce que**
les données d'état sont transmises de manière redondante par le biais des deux voies de transmission suivantes :
- un protocole de données numériques, une première communication des données d'état s'effectuant au moyen d'un paquet de données numériques en série, et
- un codage dans la transmission de puissance, une deuxième communication des données d'état s'effectuant au moyen d'une caractéristique appliquée du courant, à savoir au moyen d'une caractéristique analogique du courant,
la transmission redondante des données d'état sur les deux voies de transmission n'étant pas corrélée physiquement, la première et la deuxième communication ne pouvant pas être transmises physiquement l'une dans l'autre ou dérivées l'une de l'autre.

2. Procédé selon la revendication 1, **caractérisé en ce que** les données d'état représentent des états liés à la sécurité du réseau ou de la portion de réseau (1), un état sécurisé et un état non sécurisé pouvant notamment être déterminés.

3. Procédé selon la revendication 1 ou 2, **caractérisé en ce que** le signal série est configuré conformément à la norme IEEE 802.3cg:2019.

4. Procédé selon l'une des revendications précédentes, **caractérisé en ce que** la caractéristique du courant en tant que deuxième communication des données d'état est une intensité de courant définie pendant une durée définie et/ou une courbe de courant cadencée pendant une durée définie.

5. Procédé selon l'une des revendications précédentes, **caractérisé en ce que** la deuxième communication des données d'état est appliquée sur le deuxième côté du réseau (3) comprenant le PD (9) et est reçue et évaluée sur le premier côté du réseau (2) comprenant le PSE (8), ce qui permet notamment de déterminer un état sécurisé ou non sécurisé.

6. Procédé selon l'une des revendications précédentes, **caractérisé en ce que** la communication des données d'état est au moins une intensité de courant définie, qui est égale à au moins 1,3 fois, de préférence à au moins 1,5 fois, la courbe de courant moyenne non modulée, et l'au moins une intensité de courant définie étant maintenue constante ou sensiblement constante pendant une durée définie (dt).

7. Procédé selon l'une des revendications précédentes, **caractérisé en ce que** la deuxième communication des données d'état est au moins une intensité de courant définie, qui est égale à au moins 1,1 fois, de préférence à au moins 1,3 fois, la courbe de courant maximale possible non modulée, et l'au moins une intensité de courant définie étant maintenue constante ou sensiblement constante pendant une durée définie (dt).

8. Procédé selon l'une des revendications précédentes, **caractérisé en ce que**
- la deuxième communication des données d'état et/ou
- les deux communications parallèles de données d'état ayant une teneur informative identique, notamment un fonctionnement potentiellement dangereux, ne peuvent pas se produire par hasard dans le cadre d'une utilisation conforme du procédé.

9. Procédé selon la revendication 7 ou 8, **caractérisé en ce que** le rapport entre la durée définie (dt) et la durée indéfinie (dT) de la courbe de courant est au maximum de 1/1000, la durée définie (dt) étant supérieure à 0,25 ms, en particulier supérieure à 0,5 ms.

10. Procédé selon l'une des revendications précédentes, **caractérisé en ce que** pour la détection d'une erreur simple, la première et la deuxième communication des données d'état, notamment de l'état potentiellement dangereux, fournissent toujours les mêmes informations, une inégalité des informations de la première et de la deuxième communication définissant un état défectueux.

11. Procédé selon la revendication 10, **caractérisé en ce qu'**une durée d'ajustement maximale est définie pour atteindre une égalité entre les deux informations de la première et de la deuxième communication, un dépassement de la durée d'ajustement maximale jusqu'à atteindre l'égalité étant interprété comme une erreur.

12. Circuiterie pour un réseau ou une portion de réseau (1) comportant un premier côté réseau (2) qui possède un équipement d'alimentation électrique (PSE) (8) et un deuxième côté réseau (3) qui possède un dispositif alimenté (PD) (9), les premier (2) et deuxième (3) côtés réseau étant reliés au moyen d'un SPE (4) en tant que transmission synchrone d'alimentation et de signaux, **caractérisée en ce que** la circuiterie est conçu de telle sorte que le procédé selon l'une des revendications précédentes peut être mis en œuvre.

13. Circuiterie selon la revendication 12, **caractérisée en ce que**, de chaque côté réseau (2, 3), respectivement
- est prévu un coupleur (10, 20) réalisé sous la forme d'un composant passif, au moyen duquel la transmission série des données et la transmission de puissance s'effectuent sur les deux fils (5, 6) et
- un PHY (14, 15) en tant que module d'émission et de réception.

14. Circuiterie selon la revendication 13, **caractérisée en ce que** les coupleurs (10, 20) sont conçus de telle sorte qu'il n'y ait aucune influence ou corrélation entre la première et la deuxième transmission des données d'état par le biais des fils (5, 6) respectifs.

15. Circuiterie selon l'une des revendications 12 à 14, **caractérisée en ce que** le deuxième côté réseau (3) comportant le PD (9) comprend une unité d'alimentation (17) en tant que source de tension, qui est notamment alimentée par le biais du coupleur (20).

16. Circuiterie selon l'une des revendications 12 à 15, **caractérisée en ce que** le PD (9)
- est réalisé sous la forme d'un capteur et est l'émetteur du deuxième signal logique des données d'état ou
- est réalisé sous la forme d'un actionneur et est le récepteur des données d'état, notamment de la deuxième communication des données d'état.

17. Circuiterie selon l'une des revendications 12 à 16, **caractérisée en ce qu'**au moins un microprocesseur (18, 19) est prévu sur chaque côté du réseau (2, 3), ceux-ci étant conçus pour fonctionner de manière redondante et pour effectuer une comparaison croisée de toutes les étapes pertinentes pour la sécurité.

18. Circuiterie selon la revendication 17, **caractérisée en ce qu'**une circuiterie matérielle est prévue sur le deuxième côté du réseau (3) comprenant le PD (9) pour appliquer les données d'état à communiquer dans la transmission de puissance à la place du microprocesseur (19).
